# EUROPÄISCHE PATENTSCHRIFT

(11) **EP 0 881 123 B1**
(45) Veröffentlichungstag und Bekanntmachung des Hinweises auf die Patenterteilung: **02.07.2003**
(21) Anmeldenummer: 98108475.9
(22) Anmeldetag: 09.05.1998
(51) Int. Cl.: B60Q 1/52

(54) **Fahrzeug mit einem Abtastsystem**
Vehicle with scanning system
Véhicule avec système de balayage

(30) Priorität: 30.05.1997 DE 19722829
(43) Veröffentlichungstag der Anmeldung: 02.12.1998
(73) Patentinhaber: DaimlerChrysler AG, 70567 Stuttgart (DE)
(72) Erfinder: Dobler, Günter, 73776 Altbach (DE); Rothe, Siegfried, 73770 Denkendorf (DE)

(56) Entgegenhaltungen:
- DE-C- 19 507 957
- US-A- 4 868 720
- PATENT ABSTRACTS OF JAPAN vol. 017, no. 370 (M-1444), 13. Juli 1993 & JP 05 058363 A (YAMAHA MOTOR CO LTD), 9. März 1993
- PATENT ABSTRACTS OF JAPAN vol. 014, no. 460 (M-1032), 4. Oktober 1990 & JP 02 182549 A (STANLEY ELECTRIC CO LTD), 17. Juli 1990

## Beschreibung

Die Erfindung betrifft ein Fahrzeug mit einem Abtastsystem gemäß dem Oberbegriff des Patentanspruchs 1.

Ein derartiges Fahrzeug ist aus der Patentschrift DE 195 07 957 C1 bekannt, wobei das dortige Abtastsystem eine oder mehrere optische Abtasteinrichtungen umfaßt, die mehre Infrarotlichtelement-Sendeelemente und ein zugehöriges CCD-Array aufweisen. Das dort vorgeschlagene System tastet die Fahrbahnoberfläche ab, um über eine Abstands-, Konturen- und/oder Kontrastmessung eine jeweilige Fahrbahnbegrenzung zu ermitteln und das Fahrzeug auf einer bestimmten Fahrspur zu halten. Dabei sind insbesondere die Konturen und Reflexionseigenschaften von Fahrspur und Fahrbahnbegrenzungseinrichtungen zu erfassen. Ferner erlaubt das System bei entsprechender Auslegung die Überwachung des Fahrzeugumfeldes auf mögliche Hindernisse.

Aus der DE 44 11 125 C2 ist ein Verkehrsinformationssystem bekannt, das aus mindestens einer Sende-/Empfangseinheit in einem jeweiligen Fahrzeug und mehreren entlang einer Fahrstrecke angeordneten passiven Rücksender, sogenannten Transpondern, besteht. In den Transpondern sind streckenbezogene statische Informationen, insbesondere über die Streckenführung, die Fahrbahnanordnung oder die Verkehrsleitung abgelegt, die an eine Sende-/Empfangseinheit nach Aktivierung mittels eines Strahlungsimpulses übertragen werden. Diese Impulse können von einem Bordcomputer zur Beeinflussung oder Steuerung des Fahrzeugantriebsstranges herangezogen werden.

Aus der US 4 868 720 ist des weiteren ein Motorrad bekannt, das ein Abtastsystem und eine Auswerteeinheit zur Ermittlung des Kippwinkels des Motorrads aufweist und das ferner einen verstellbaren Scheinwerfer aufweist, dessen Lampenachse zur Erzielung einer optimalen Fahrbahnausleuchtung in Abhängigkeit des Kippwinkels verstellbar ist.

Aufgabe der Erfindung ist es, ein Fahrzeug gemäß dem Oberbegriff des Patentanspruchs 1 bereitzustellen, bei dem mit relativ geringem Aufwand eine zuverlässige Erfassung von für die Fahrdynamik des Fahrzeuges wesentlichen Einflußgrößen möglich ist.

Die Aufgabe wird erfindungsgemäß durch ein Fahrzeug mit den Merkmalen des Patentanspruchs 1 gelöst. Dabei werden mit Hilfe eines berührungslos messenden Abtastsystems Meßdaten gewonnen, aus denen Fahrbahneigenschaften sowie eine für die Fahrdynamik wesentliche Einflußgröße, nämlich der Kippwinkel des Fahrzeugs bezüglich der Fahrbahn, ermittelt werden.

Das Abtastsystem kann beispielsweise durch optische oder akustische Sende-Empfänger-Kombinationen realisiert werden. Über die Kippwinkelbestimmung kann z.B. das Kippmoment des Fahrzeuges bei jeder Fahrgeschwindigkeit ermittelt werden. Außerdem kann die Beladungsverteilung und mittels weiterer Meßgrößen auf die Gesamtladung geschlossen werden.

Vorzugsweise ist die Auswerteeinheit zur Bestimmung eines auf das Fahrzeug wirkenden Kippmoments anhand der Massenverteilung bzw. des Beladungszustands im Fahrzeug, der Fahrgeschwindigkeit, der Kippwinkelgeschwindigkeit, der absoluten Neidung der Fahrbahn oder dergleichen Informationen eingerichtet. Ein nach Anspruch 3 weitergebildetes Fahrzeug weist eine Anordnung von Abtasteinheiten auf, mit der Meßdaten aufgenommen werden können, die Rückschlüsse auf die Fahrzeuglage relativ zur Fahrbahn im Hinblick auf die Fahrzeugbeladung zulassen, indem an wenigstens drei nicht auf einer Geraden liegenden Punkten der Abstand zur Fahrbahn ermittelt wird.

Bei einem nach Anspruch 4 weitergebildeten Fahrzeug werden die von dem Abtastsystem ermittelten Daten dazu verwendet, in Abhängigkeit davon fahrdynamische Grenzwerte festzulegen, deren Überschreitung aus Sicherheitsgründen vermieden werden sollte. Die Ausgabe entsprechender Informationssignale ermöglicht es dem Fahrzeugführer, sein Fahrverhalten der festgestellten Gefahrensituation anzupassen.

Vorteilhafterweise kann gemäß einer Weiterbildung der Erfindung nach Anspruch 5 das Abtastsystem von einer oder mehreren, zeilenförmig abtastenden, optischen Abtasteinheiten gebildet sein, die aus einer IR-Sendeelementzeile und einem CCD-Array oder einer Fotodioden- oder Fototransistorenzeile bestehen.

Bevorzugte Ausführungsbeispiele der Erfindung sind in den Zeichnungen dargestellt und werden nachfolgend beschrieben. Hierzu zeigen:
- Fig. 1: eine Vorderansicht eines Personenkraftwagens mit je einer in einen Außenspiegel integrierten optischen Abtasteinheit auf beiden Fahrzeugseiten,
- Fig. 2: eine schematische Draufsicht auf einen Lastkraftwagen mit vier an den Seiten des Fahrzeugs angeordneten Abtasteinheiten,
- Fig. 3: eine schematische Rückansicht des Lastkraftwagens von Fig. 2 zur Veranschaulichung einer Beladungszustandsermittlung,
- Fig. 4: eine Seitenansicht eines vorderen Teils eines Personenkraftwagens mit einer zur Bestimmung des Fahrbahnzustandes geeigneten Abtasteinheit an einem Außenspiegel mit einer skizzierten Darstellung der Reflexion eines Infrarot-Lichtstrahls von einer trockenen Fahrbahn,
- Fig. 5: eine skizzierte Darstellung der Reflexion eines IR-Lichtstrahls von einer nassen Fahrbahn,
- Fig. 6: eine skizzierte Darstellung der Reflexion eines IR-Lichtstrahls von einer schneebedeckten Fahrbahn und
- Fig. 7: eine skizzierte Darstellung der Reflexion eines IR-Lichtstrahls von einer vereisten Fahrbahn.

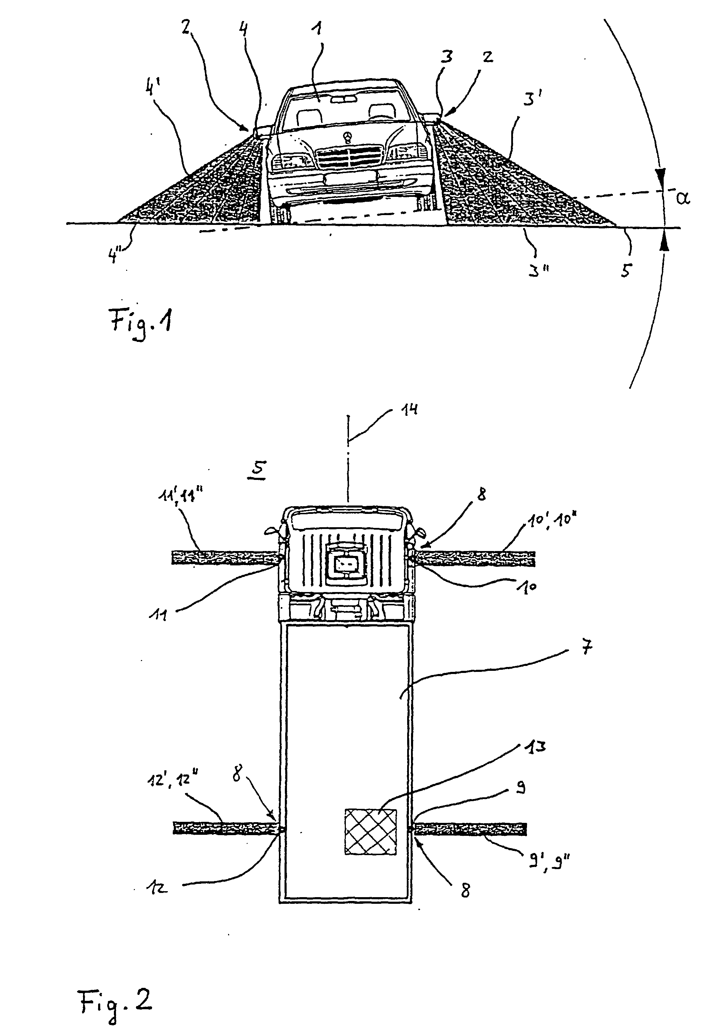

Der in Fig. 1 dargestellte Personenkraftwagen 1 ist mit einem optischen Abtastsystem 2 ausgerüstet, das eine in den linken Außenspiegel des Personenkraftwagens integrierte Abtasteinheit 3 und eine in den rechten Außenspiegel des Kraftwagens integrierte Abtasteinheit 4 aufweist. Beide Abtasteinheiten 3, 4 besitzen ein gleichmäßiges Raster mehrerer IR-Licht-Sender und zugehöriger Empfänger, deren Abstrahlungs- bzw. Abtastbereiche 3' bzw. 4', die eine Breitenausdehnung von z.B. etwa einem Meter haben, idealisiert wiedergegeben sind. Hierfür sind z.B. die aus der oben erwähnten DE 195 07 957 C1 bekannten Abtasteinheiten verwendbar, worauf für weitere diesbezügliche Details verwiesen werden kann. Insbesondere sind bei diesen Abtasteinheiten die Empfänger von jeweiligen CCD-Arrays mit beispielsweise 64 Bildpunkten gebildet. Alternativ können andere linienförmig abtastende Lichtsensoren als Empfänger eingesetzt werden, z.B. eine Zeile von 12 oder einer anderen Anzahl von Fotodioden oder Fototransistoren. Die beiden Abtasteinheiten 3, 4 übermitteln ihre Informationssignale einer nicht dargestellten, zentralen Auswerteeinheit, die diese Signale empfängt, auswertet und weiterverarbeitet.

Von den beiden Abtasteinheiten 3, 4 wird jeweils ein seitlicher Fahrbahnbereich 3'' bzw. 4'' mit IR-Licht angestrahlt und abgetastet, wodurch an sich bekannte Laufzeitmessungen mit Hilfe der reflektierten IR-Lichtstrahlen realisierbar sind. Daraus lassen sich die Abstände zwischen der linken fahrzeugfesten Abtasteinheit 3 und dem zugehörigen Fahrbahnbereich 3'' einerseits sowie der ebenfalls fahrzeugfesten rechten Abtasteinheit 4 und dem zugehörigen Fahrbahnbereich 4'' durch die Auswerteeinheit detektieren. Aus den gemessenen Abstandsdaten, der Geometrie des Fahrzeuges und ggf. weiteren Daten, wie z.B. über die verschiedenen Reifendrücke, kann der Kippwinkel α des Fahrzeuges bezüglich der Fahrbahn 5 bestimmt werden. Weiter ist es der Auswerteeinheit möglich, unter geeigneter Berücksichtigung weiterer Informationen, beispielsweise über die Massenverteilung bzw. den Beladungszustand im Fahrzeug 1, die Fahrgeschwindigkeit, die Kippwinkelgeschwindigkeit und die absolute Neigung der Fahrbahn, ein auf das Fahrzeug einwirkendes Kippmoment zu errechnen.

Das Auswerteergebnis der vom Abtastsystem gewonnenen Meßdaten wird von der Auswerteeinheit dahingehend weiterverarbeitet, daß in Abhängigkeit vom Kippwinkel und/oder Kippmoment Grenzwerte für die Geschwindigkeit und die Beschleunigung des Fahrzeuges festgelegt werden, bei deren Überschreiten optische, akustische oder haptische Warnsignale an den Fahrer abgegeben werden. Dabei werden die Grenzwerte zweckmäßigerweise auch abhängig davon gewählt, ob Geradeausfahrt oder Kurvenfahrt vorliegt und ggf. mit welchem Kurvenradius bzw. welcher Querbeschleunigung. Ferner ist es möglich, die Informationssignale der Auswerteeinheit an eine zentrale Motorsteuerung weiterzuleiten, die automatisch eine Beschränkung der Motorleistung, der Fahrzeuggeschwindigkeit und/oder -beschleunigung vornehmen kann. Auf diese Weise läßt sich eine ausreichende Fahrstabilität auch in fahrdynamischen Grenzsituationen und insbesondere ein wirkungsvoller Schutz gegen ein Überschlagen des Fahrzeuges gewährleisten.

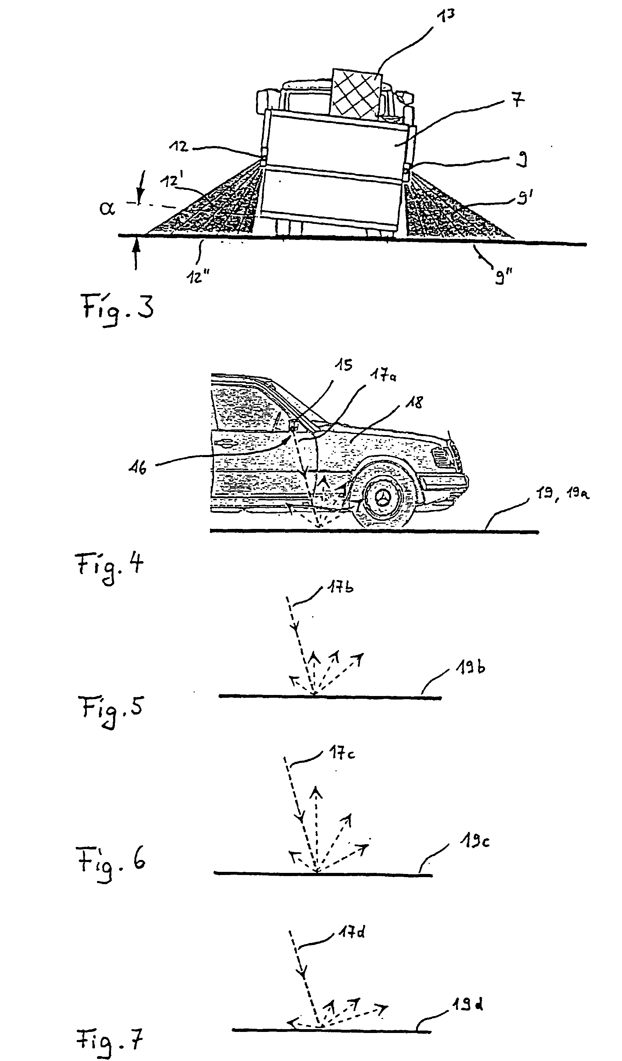

In Fig. 2 ist ein Lastkraftwagen 7 mit einem optischen Abtastsystem 8 dargestellt, das vier Abtasteinheiten 9, 10, 11, 12 sowie eine nicht dargestellte Auswerteeinheit umfaßt, wobei die Abtasteinheit 9 an einem hinteren rechten, die Abtasteinheit 10 an einem vorderen rechten, die Abtasteinheit 11 an einem vorderen linken und die Abtasteinheit 12 an einem hinteren linken Fahrzeugseitenbereich angeordnet sind. Fig. 3 zeigt hierzu eine Ansicht des Lastkraftwagens 7 von hinten in Fahrtrichtung. Auf der Ladefläche des Lastkraftwagens 7 ist beispielhaft dargestellt eine Frachtladung 13 im hinteren Bereich des Lastkraftwagens 7 außermittig angeordnet.

Da das Fahrzeugchassis über die Radaufhängungen federnd auf dem Fahrwerk gelagert ist, wirkt sich die zusätzliche Last 13 in einer Änderung des Beladungszustandes, d.h. in einer Änderung der Lage des Fahrzeugchassis bezüglich des Fahrwerks und damit auch bezüglich der Fahrbahn aus, indem sich das Fahrzeugchassis sowohl um einen Kippwinkel α als auch um einen nicht aus den Zeichnungen ersichtlichen Nickwinkel β zwischen Chassislängsachse 14 und Fahrbahn neigt. Diese gegenüber dem Leerzustand des Fahrzeuges veränderte Lage des Fahrzeugchassis bezüglich der Fahrbahn hat eine entsprechende Änderung des Abstandes der Abtasteinheiten 9, 10, 11, 12 zu einem jeweiligen Fahrbahnabschnitt 9'', 10'', 11'', 12'' zur Folge. Da das in den Figuren 2 und 3 dargestellte Abtastsystem 8 vier Abtasteinheiten 9, 10, 11, 12 beinhaltet, ist es mit Hilfe der nicht dargestellten Auswerteeinheit anhand der zugeführten Abstandsmeßdaten sowie weiterer Daten über die Geometrie des Fahrzeuges und ggf. der Fahrzeuggeschwindigkeit möglich, den Fahrzeugbeladungszustand zu bestimmen.

In dem vorliegenden Ausführungsbeispiel der Erfindung gemäß Fig. 2 sind vier Abtasteinheiten 9, 10, 11, 12 vorgesehen, die im allgemeinen ein genaueres Meßergebnis liefern als ein einfacheres Ausführungsbeispiel mit der Mindestanzahl von drei Abtasteinheiten. Insbesondere wird dadurch auch der Einfluß größerer Fahrbahnunebenheiten reduziert, die das Ergebnis der Auswerteeinheit beeinträchtigen können.

Weitergehend wird dieses Auswerteergebnis von der Auswerteeinheit dazu verwendet, in Abhängigkeit vom Fahrzeugbeladungszustand und dem Querbewegungszustand des Fahrzeugs Grenzwerte für die Geschwindigkeit und die Beschleunigung des Fahrzeuges festzulegen, bei deren Überschreiten optische, akustische oder haptische Warnsignale an den Fahrer abgegeben werden. Es ist ferner vorgesehen, unabhängig vom Überschreiten des Grenzwertes einer zulässigen Geschwindigkeit oder Beschleunigung den Fahrer über den Beladungszustand zu informieren, insbesondere auch über die Überschreitung eines Grenzwertes hinsichtlich der Fahrzeugbeladung, und zwar je nach Bedarf bei Überschreitung einer zulässigen Gesamtbeladung und/oder bei zu einseitiger Beladung. Ferner ist es möglich, die Informationssignale der Auswerteeinheit an eine zentrale Motorsteuerung weiterzuleiten, die automatisch eine Beschränkung der Motorleistung, der Geschwindkeit und/oder der Beschleunigung des Fahrzeugs vornehmen kann.

In einem weiteren Ausführungsbeispiel der Erfindung weist ein Personenkraftwagen 18, wie in Fig. 4 dargestellt, ein Abtastsystem 16 auf, das eine optische Abtasteinheit 15 und eine nicht dargestellte Auswerteeinheit umfaßt. Die Abtasteinheit 15 ist in den rechten Außenspiegel des Kraftfahrzeuges 18 integriert und sendet in Richtung der Fahrbahnoberfläche 19 IR-Lichtstrahlen aus, von denen einer als gestrichelte Linie 17a schematisch dargestellt ist. Der ausgesandte IR-Lichtstrahl 17a trifft auf eine trockene Fahrbahnoberfläche 19a, von der er reflektiert bzw. gestreut wird, wie dies in Fig. 4 durch gestrichelte Pfeile dargestellt ist. Da unterschiedliche Fahrbahnzustände, wie nasser, schneebedeckter, vereister, verschmutzter oder trockener Fahrbahnzustand, unterschiedliche Reflexionseigenschaften der Fahrbahnoberfläche zur Folge haben, ist es möglich, aus dem jeweils rückgestreuten bzw. reflektierten Licht der IR-Lichtstrahlenbündel auf den Fahrbahnzustand zu schließen, wie dies in den Figuren 4 bis 7 veranschaulicht ist. Dort ist beispielhaft jeweils ein vom Abtastsystem über seine Abtasteinheit 15 emittierter IR-Lichtstrahl 17a, 17b, 17c, 17d gezeigt, der in Fig. 4 von einer trockenen Fahrbahn 19a, in Fig. 5 von einer nassen Fahrbahn 19b, in Fig. 6 von einer schneebedeckten Fahrbahn 19c und in Fig. 7 von einer vereisten Fahrbahn 19d rückgestreut wird. Ein Teil der rückgestreuten IR-Lichtstrahlen trifft auf die Abtasteinheit 15, welche Informationen über die Intensität des empfangenen IR-Lichts an die Auswerteeinheit weitergibt.

Durch Verwenden einer regelmäßigen Anordnung mehrerer IR-Licht-Sendeelemente und eines zugehörigen Empfängers, z.B. eines CCD-Arrays, in der Abtasteinheit 15 können die Intensitäten und die Intensitätsunterschiede der rückgesteuten IR-Lichtstrahlen zuverlässig detektiert werden. Die Auswerteeinheit wird dadurch in die Lage versetzt, mit Hilfe einer Kontrastanalyse die Reflexionseigenschaften und die Textur der Fahrbahnoberfläche 19 festzustellen. Mit der Fahrbahntextur wird ein für das Fahrverhalten des Kraftfahrzeuges 18 insofern relevanter Parameter erfaßt, als die Textur Aufschluß darüber gibt, welche Reibungsverhältnisse zwischen Fahrbahn und Fahrzeugbereifung vorliegen.

Die Auswerteeinheit gewinnt somit Informationen über den Fahrbahnzustand, die sie als Warn- und/oder Informationssignale an den Fahrzeugführer abgibt, oder die Auswerteeinheit bestimmt in Abhängigkeit davon Geschwindigkeits- und Beschleunigungsgrenzwerte, bei deren Überschreiten sie entweder wiederum Warnsignale an den Fahrer oder aber Steuersignale an eine zentrale Motoroder Fahrdynamiksteuereinheit weitergibt, welche nachfolgend beschränkend auf den Betrieb des Kraftfahrzeuges einwirkt.

Gegebenenfalls kann aus der erfaßten Textur auch auf den seitlichen Rand der Fahrbahn und/oder das Vorhandensein von Fahrspurmarkierungen geschlossen werden, da eine Unterscheidung nicht nur zwischen witterungsbedingt veränderten Fahrbahnoberflächen, sondern auch zwischen verschiedenen Untergrundarten wie Asphalt, Gras, Kies, Erde usw. möglich ist.

Idealerweise weist ein Fahrzeug ein Abtastsystem mit den Eigenschaften aller drei gezeigten Ausführungsbeispiele auf, so daß in der Auswerteeinheit kippwinkel-, kippmoment-, fahrzeugbeladungs- und fahrbahnzustandsbezogene Daten verarbeitet werden können, aus deren kombinierter Auswertung in einem erfindungsgemäßen Fahrzeug exakte Fahrdynamikdaten erfaßt und Fahrdynamikgrenzwerte generiert werden können. Eine Bestimmung eines zeitlichen Mittelwertes von über eine längere Zeitspanne hinweg erfaßten Daten und/oder eine Bestimmung eines Mittelwertes der von mehreren Abtasteinheiten erfaßten Daten ermöglicht zusätzlich zu einer Datenfilterung eine gesteigerte Genauigkeit bei der Meßdatenauswertung.

## Patentansprüche

1. Fahrzeug mit einem Abtastsystem (2, 8, 16) zur berührungslosen Abtastung eines oder mehrerer voneinander beabstandeter Fahrbahnbereiche und einer Auswerteeinheit zur Verarbeitung der vom Abtastsystem (2, 8, 16) erfaßten Meßdaten,
wobei die Auswerteeinheit eingerichtet ist zur Bestimmung des Fahrbahnzustandes und zur Erfassung von Fahrspurmarkierungen und des seitlichen Randes der Fahrbahn anhand der vom Abtastsystem ermittelten Reflexionseigenschaften der Fahrbahnoberfläche (19),
**dadurch gekennzeichnet, dass**
die Auswerteeinheit weiterhin eingerichtet ist zur Bestimmung des Kippwinkels (α) des Fahrzeuges bezüglich der Fahrbahn (5) anhand der vom Abtastsystem ermittelten kippwinkelbezogener Meßdaten, wobei das Abtastsystem mindestens zwei Abtasteinheiten (3, 4) beinhaltet, von denen die eine im linken und die andere im rechten Fahrzeugseitenbereich angeordnet ist.

2. Fahrzeug nach Anspruch 1,
**dadurch gekennzeichnet, dass**
die Auswerteeinheit zur Bestimmung eines auf das Fahrzeug einwirkendes Kippmoment anhand der Massenverteilung bzw. des Beladungszustandes im Fahrzeug, der Fahrgeschwindigkeit, der Kippwinkelgeschwindigkeit, der absoluten Neigung der Fahrbahn, oder dergleichen Informationen eingerichtet ist.

3. Fahrzeug nach Anspruch 1 oder 2,
**dadurch gekennzeichnet, dass**
die Auswerteeinheit zur Bestimmung des
Fahrzeugbeladungszustandes eingerichtet ist und das Abtastsystem zur Erfassung beladungsbezogener Meßdaten wenigstens drei Abtasteinheiten (9, 10, 11) beinhaltet, die nicht auf einer Linie liegend am Fahrzeug (7) angeordnet sind.

4. Fahrzeug nach wenigstens einem der vorherigen Ansprüche,
**dadurch gekennzeichnet, dass**
die Auswerteeinheit in Abhängigkeit vom ermittelten Kippwinkel, Kippmoment, Fahrzeugbeladungszustand oder Fahrbahnzustand Grenzwerte für die Geschwindigkeit und/oder Beschleunigung des Fahrzeuges (1, 7, 18) festlegt, bei deren Überschreiten sie entsprechende Informationssignale ausgibt.

5. Fahrzeug nach einem der Ansprüche 1 bis 4,
**dadurch gekennzeichnet, dass**
das Abtastsystem wenigstens eine optische Abtasteinheit in Form einer Zeile von IR-Lichtsendeelementen und eines zugehörigen Lichtsensors umfaßt, der durch ein CCD-Array oder eine zugehörige Zeile von Fotodioden oder Fototransistoren gebildet ist.

## Claims

1. Vehicle with a sensor system (2,8, 16) for the contact-free sensing of one or several spaced apart carriageway areas and an evaluating unit for processing the measurement data recorded by the sensor system (2, 8, 16),
wherein the evaluating unit is equipped for the determination of the state of the carriageway and for recording lane markings and the side edge of the carriageway using the reflection properties of the carriageway surface ascertained by the sensor system,
**characterised in that**
the evaluating unit is furthermore equipped for the determination of the tilt angle (α) of the vehicle in relation to the carriageway (5) using the measuring data relating to tilt angle ascertained by the sensor system wherein the sensor system contains at least two sensor units (3, 4), of which one is arranged in the left side region of the vehicle and the other in the right side region of the vehicle.

2. Vehicle according to claim 1
**characterised in that**
the evaluating unit is equipped for the determination of a tilt moment influencing the vehicle using the mass distribution / the load state in the vehicle, the travelling speed, the tilt angle speed, the absolute gradient of the carriageway or similar information.

3. Vehicle according to claim 1 or 2
**characterised in that**
the evaluating unit is equipped for the determination of the vehicle load state and the sensor system contains at. least three sensor units (9, 10, 11) for the recording of load-related measurement data which are not arranged in a line on the vehicle (7).

4. Vehicle according to at least one of the preceding claims
**characterised in that** the evaluating unit fixes, depending upon the determined tilt angle, tilt moment, vehicle load state or carriageway state, threshold values for the speed and/or acceleration of the vehicle (1, 7, 18) wherein it emits information signals if these threshold values are exceeded.

5. Vehicle according to one of the claims 1 to 4
**characterised in that**
the sensor system comprises at least one optical sensor unit in the form of a row of IR light emitting elements and an associated light sensor which is formed by a CCD array or an associated row of photodiodes or phototransistors.

## Revendications

1. Véhicule comprenant un système d'exploration (2, 8, 16) pour explorer une ou plusieurs zones de chaussée espacées les unes des autres, et une unité de traitement pour traiter les données de mesure relevées par le système d'exploration (2, 8, 16),
l'unité de traitement étant conçue pour déterminer l'état de la chaussée et pour relever des marquages de voies de la chaussée et le bord latéral de la chaussée, à l'aide des propriétés de réflexion de la surface (19) de la chaussée déterminées par le système d'exploration, **caractérisé en ce que** l'unité de traitement est en outre conçue pour déterminer l'angle de renversement (α) du véhicule par rapport à la chaussée (5) à l'aide de valeurs de mesure relatives à l'ange de renversement déterminées par le système d'exploration, le système d'exploration comprenant au moins deux unités d'exploration (3, 4) dont l'une est disposée dans la partie latérale gauche et l'autre dans la partie latérale droite du véhicule.

2. Véhicule selon la revendication 1, **caractérisé en ce que** l'unité de traitement est conçue pour la détermination d'un couple de renversement agissant sur le véhicule à l'aide de la répartition des masses et respectivement de l'état de chargement dans le véhicule, de la vitesse de marche, de la vitesse de variation de l'angle de renversement, de l'inclinaison absolue de la chaussée ou d'informations similaires.

3. Véhicule selon la revendication 1 ou 2, **caractérisé en ce que** l'unité de traitement est conçue pour la détermination de l'état de chargement du véhicule, et le système d'exploration comprend, pour relever des données de mesure relatives au chargement, au moins trois unités d'exploration (9, 10, 11) qui sont disposées sur le véhicule de façon à ne pas être alignées.

4. Véhicule selon l'une des revendications précédentes, **caractérisé en ce que** l'unité de traitement définit, en fonction de l'angle de renversement, du couple de renversement, de l'état de chargement du véhicule ou de l'état de la chaussée ayant été déterminés, des valeurs de seuil pour la vitesse et/ou l'accélération du véhicule (1, 7, 18), et émet, en cas de dépassement de ces valeurs de seuil, des signaux d'information correspondants.

5. Véhicule selon l'une des revendications 1 à 4, **caractérisé en ce que** le système d'exploration comprend au moins une unité d'exploration optique sous la forme d'une ligne d'éléments émetteurs infrarouges, et un détecteur optique associé, qui est formé par un réseau CCD ou une ligne associée de photodiodes ou de phototransistors.
